# EUROPÄISCHE PATENTSCHRIFT

(11) **EP 3 114 053 B1**
(45) Veröffentlichungstag und Bekanntmachung des Hinweises auf die Patenterteilung: **22.09.2021**
(21) Anmeldenummer: 15707673.8
(22) Anmeldetag: 05.03.2015
(51) Int. Cl.: B65G 27/00, B07B 13/18

(54) **MASCHINE ZUR VEREINZELUNG VON ELEMENTEN**
MACHINE FOR SEPARATING ELEMENTS
MACHINE DE SÉPARATION D'ÉLÉMENTS

(30) Priorität: 05.03.2014 IT MI20140342
(43) Veröffentlichungstag der Anmeldung: 11.01.2017
(73) Patentinhaber: Bühler AG, 9240 Uzwil (CH)
(72) Erfinder: MAGGIONI, Roberto, I-20064 Gorgonzola (IT)
(74) Vertreter: Hepp Wenger Ryffel AG
(86) Internationale Anmeldenummer: PCT/EP2015/054599
(87) Internationale Veröffentlichungsnummer: WO 2015/132335

(56) Entgegenhaltungen:
- EP-A1- 0 583 899
- WO-A1-2010/059036
- GB-A- 143 628
- US-A- 3 917 050
- US-A- 5 190 139

## Beschreibung

Die vorliegende Erfindung betrifft eine Maschine zur Vereinzelung von Elementen, im Besonderen für Nahrungsmittel wie zum Beispiel Trockenfrüchte oder Ähnliches, in der Art wie sie in der Einleitung des ersten Patentanspruchs erläutert wird.

Derzeit sind in der Nahrungsmittelerzeugung und im Besonderen in der Süßwarenerzeugung Vereinzelungsmaschinen erforderlich, die durch Entnehmen von Trockenfrüchten aus einer ungeordneten Anhäufung in der Lage sind, die einzelnen Trockenfrüchteelemente in passenden Positionen anzuordnen. Solche Maschinen sind auch in vielen anderen Industriebranchen erforderlich.

Aus der US 5,190,139 ist beispielsweise eine Rüttelvorrichtung bekannt mit einer Vielzahl von Rüttelrinnen, die jeweils mit einem Motorelement verbindbar sind, so dass die Rüttelrinnen individuell angetrieben werden können.

Die Maschinen arbeiten mit Bahnen mit geringer Breite, um den Vorschub von einzelnen Trockenfruchtelementen zu ermöglichen. Der Vorschub der Trockenfrüchte auf den Bahnen wird außerdem durch das Vorhandensein einer Rüttelvorrichtung ermöglicht, die vektorielle Vibrationen auf die Bahnen in passenden Zeitabschnitten überträgt, sodass sie den Vorschub der Trockenfrüchte aufgrund der Vibrationen ermöglicht.

Die Trockenfrüchte werden dann zu eigens dazu vorgesehenen Formen weitergeleitet, die danach zum Beispiel auch mit zerlassenen Nahrungsmitteln wie Schokolade und Ähnlichem gefüllt werden.

Der oben erwähnte Stand der Technik weist einige bedeutende Nachteile auf.

Der Vorschub der Elemente gestaltet sich nämlich sehr unregelmäßig. Die Unregelmäßigkeit ist auf die stets, wenn auch in minimalem Ausmaß, vorhandenen Unterschiede der Bahnen und der Elemente zurückzuführen, die vom Rüttelfördersystem verstärkt werden.

Diese Unterschiede sind deutlich größer, wenn es sich um Nahrungsmittel oder andere natürliche Elemente handelt, die sich voneinander deutlich unterscheiden.

Es erweist sich daher als sehr problematisch, Vereinzelungsmaschinen mit mehreren Bahnen zu erzeugen, die synchronisiert in Sequenz arbeiten können oder Elemente bei einem bestimmten Zeitpunkt während des Prozesses abgeben können, ein Merkmal, das jedoch erforderlich wäre, um eine wirtschaftliche, rasche und optimale Produktion zu erzielen.

Außerdem sind Vereinzelungsmaschinen sehr komplex. Die Komplexität bringt erhöhte Kosten mit sich und erfordert eine ständige Wartung, welche die Kosten zusätzlich erhöht.

Die Komplexität bringt außerdem eine erhöhte Anfälligkeit der Vorrichtung mit sich. Diese Anfälligkeit kann zu Brüchen in den Rüttelvorrichtungen und den damit in Verbindung stehenden Vorrichtungen führen, die wiederum zu problematischen Produktionsunterbrechungen führen.

In Anbetracht dieser Situation besteht die der vorliegenden Erfindung zugrunde liegende technische Aufgabe darin, eine Maschine zur Vereinzelung von Elementen zu erfinden, die in der Lage ist, den genannten Nachteilen im Wesentlichen entgegenzuwirken.

Ein wichtiges Ziel im Rahmen der technischen Aufgabe besteht darin, eine Maschine zur Vereinzelung von Elementen zu erhalten, die ermöglicht, das Austreten der Elemente aus den Bahnen zu synchronisieren oder zu regeln und/oder steuern.

Ein weiteres wichtiges Ziel der Erfindung besteht darin, eine Maschine zur Vereinzelung von Elementen zu erfinden und zu erhalten, die einfach und wirtschaftlich ist.

Die technische Aufgabe und die genau dargestellten Ziele werden durch eine Maschine und das entsprechende, von der Maschine auszuführende Verfahren zur Vereinzelung von Elementen erreicht und erzielt, wie sie in den angehängten unabhängigen Ansprüchen beansprucht wird.

Bevorzugte Ausführungsformen sind in den abhängigen Ansprüchen dargestellt.

Die Maschine zur Vereinzelung von Elementen umfasst mehrere Bahnen, von denen jede eine Vorschubbahn bildet und jede geeignet ist, um die entlang der Vorschubbahn aufgereihten Elemente weiterzuleiten, wobei die Bahn eine Austrittsöffnung einschließt, durch die die Elemente austreten können, und mehrere Rüttelvorrichtungen, von denen jede mit nur einer der Bahnen verbunden ist und mechanische Vibrationen auf die verbundene Bahn übertragen kann, um den Vorschub der Elemente entlang der Vorschubbahn zu bewirken.

Das Verfahren umfasst analog bevorzugt eine Phase der Kanalisierung der Elemente entlang mehrerer Bahnen, von denen jede eine Vorschubbahn bildet, eine Phase der Weiterleitung der Elemente entlang der Vorschubbahn zu Austrittsöffnungen, durch die die Elemente austreten, wobei die Weiterleitungsphase durch mechanische Vibrationen erfolgt, die auf die einzelnen Bahnen übertragen werden.

Die Maschine und das Verfahren weisen ferner Mittel zur bzw. eine Phase der Erfassung von Elementen, die die Bahn verlassen, die den Durchgang der Elemente durch die Ausgangsöffnung erfassen können, und Steuerungsmittel, die funktionell mit den Erfassungsmitteln und den Rüttelvorrichtungen verbunden sind und den Stopp einer der Rüttelvorrichtungen befehlen können, wenn die Mittel zur Erfassung den Durchgang eines Elements durch die Ausgangsöffnung der verbundenen Bahn erfassen, auf.

Es ist somit klar, dass durch Stoppen der Rüttelvorrichtungen die Weiterleitung der Elemente genau kontrolliert werden kann. An dieser Stelle muss vermerkt werden, dass ein Stoppen der Rüttelvorrichtung nicht zwangsläufig mit einem Stillstand der Rüttelvorrichtung gleichzusetzen ist.

Durch Änderung der Vibrationseigenschaften der Rüttelvorrichtung wie beispielsweise die Frequenz oder Amplitude der Vibration kann erreicht werden, dass die Elemente die jeweilige Bahn nicht mehr verlassen oder zumindest dass die Elemente langsamer als beim Normalbetrieb befördert werden.

Die Mittel zur Erfassung der Elemente, die die Bahn verlassen, können optische Mittel sein.

Alternativ können die Mittel auch als mechanische und/oder akustische, z.B. mit Ultraschall, Mittel ausgebildet sein.

Alternativ können Steuerungsmittel der Vereinzelungsmaschine vorhanden sein, die funktionell mit den Erfassungsmitteln und den Rüttelvorrichtungen verbunden sind und die Vibrationen der Rüttelvorrichtungen regeln und/oder steuern in Abhängigkeit des von den Mitteln erzeugten Signals.

Durch das Regeln und/oder Steuern in Abhängigkeit des von den Mitteln erzeugten Signals kann somit jede Bahn derart bewegt werden, dass die Elemente wie gewünscht befördert werden. Es kann somit beispielsweise sichergestellt werden, dass bei einem bestimmten Prozessschritt oder in einer bestimmten Prozessphase eine genau festgelegte Anzahl von Elementen die Bahn verlässt.

Die Merkmale und Vorteile der Erfindung werden nachfolgend durch die detaillierte Beschreibung einer bevorzugten Ausführungsform der Erfindung unter Bezugnahme auf die beiliegenden Zeichnungen erklärt, wobei:
- **Figur 1**: eine erste schematische Darstellung einer erfindungsgemäßen Maschine zur Vereinzelung von Elementen darstellt;
- **Figur 2**: einen Teil der Maschine von Figur 1, die erfindungsgemäße Rüttelvorrichtung, im Querschnitt darstellt;
- **Figur 3a**: einen Teil der Vereinzelungsmaschine von Figur 1 in einer ersten Konfiguration darstellt;
- **Figur 3b**: einen Teil der Vereinzelungsmaschine von Figur 1 in einer zweiten Konfiguration darstellt;
- **Figur 3c**: einen Teil der Vereinzelungsmaschine von Figur 1 in einer dritten Konfiguration darstellt;
- **Figur 3d**: einen Teil der Vereinzelungsmaschine von Figur 1 in einer vierten Konfiguration darstellt;
- **Figur 3e**: einen Teil der Vereinzelungsmaschine von Figur 1 in einer fünften Konfiguration darstellt;
- **Figur 3f**: einen Teil der Vereinzelungsmaschine von Figur 1 in einer sechsten Konfiguration darstellt;
- **Figur 4a**: einen Teil einer Variante der erfindungsgemäßen Vereinzelungsmaschine in einer ersten Konfiguration darstellt;
- **Figur 4b**: die Variante der Vereinzelungsmaschine von Figur 4a in einer zweiten Konfiguration darstellt;
- **Figur 4c**: die Variante der Vereinzelungsmaschine von Figur 4a in einer dritten Konfiguration darstellt;
- **Figur 4d**: die Variante der Vereinzelungsmaschine von Figur 4a in einer vierten Konfiguration darstellt;
- **Figur 4e**: die Variante der Vereinzelungsmaschine von Figur 4a in einer fünften Konfiguration darstellt;
- **Figur 4f**: eine Variante der Vereinzelungsmaschine von Figur 4a in einer sechsten Konfiguration darstellt;

Unter Bezugnahme auf die genannten Figuren ist eine erfindungsgemäße Vereinzelungsmaschine im Gesamten mit der Nummer 1 angegeben.

Sie ist geeignet, um Elemente 100, genauer gesagt Nahrungsmittel, im Besonderen Trockenfrüchte, beispielsweise für Nahrungsmittel und im Besonderen für Süßigkeiten, zum Beispiel Haselnüsse und Erdnüsse, zu vereinzeln.

Die Vereinzelungsmaschine 1 umfasst mehrere Bahnen 2, von denen jede eine Vorschubbahn 2a bildet und geeignet ist, um die aufgereihten Elemente 100, vorzugsweise eines nach dem anderen, entlang der Vorschubbahn 2a weiterzuleiten. Jede Bahn 2 ist vorzugsweise waagrecht oder, alternativ dazu, leicht geneigt, sodass die Gegenstände 100 auch durch die Schwerkraft verlagert werden, und schließt im Abschnitt mit dem kleinsten Schwerkraftpotenzial, das heißt im untersten Teil, eine Austrittsöffnung 20 ein, durch die die Elemente 100 heraustreten. Die Bahnen 2 sind vorzugsweise aus Metall mit trapezförmigem Querschnitt ohne die längere Grundseite, die virtuell nach oben gerichtet ist.

In den beiliegenden Zeichnungen ist nur eine einzige Bahn 2 zu erkennen, weil dieselben entlang der zur Ebene der Figur senkrechten Richtung ausgerichtet und daher nicht sichtbar sind.

Die Vereinzelungsmaschine 1 umfasst außerdem mehrere Rüttelvorrichtungen 3, von denen jede mit bevorzugt nur einer Bahn 2 verbunden ist und mechanische Vibrationen auf die verbundene Bahn 2 übertragen kann, sodass der Vorschub der Elemente 100 entlang der Vorschubbahn 2a veranlasst wird.

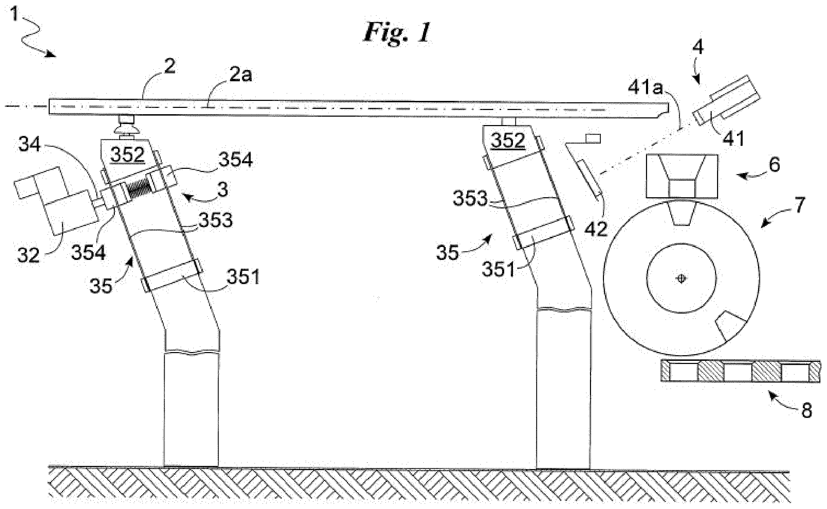

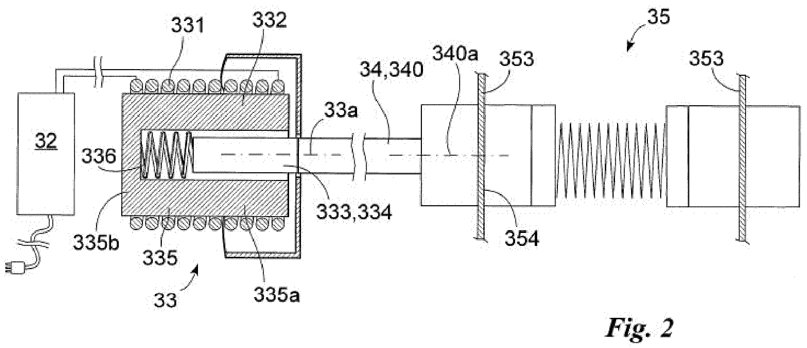

Die Rüttelvorrichtungen 3 sind vorzugsweise von der Art wie in der italienischen Patentanmeldung MI2013A001656 desselben Anmelders von Seite 3 bis Seite 8 und in Figur 1-3 dargestellt.

Die Rüttelvorrichtung 3 ist auf einer Halteebene 1a der Maschine 1 angeordnet, das heißt auf dem Boden oder einem damit fest verbundenen Element. Sie können auf die Bahnen 2 vektorielle Vibrationen übertragen, sodass die Gegenstände 100 in Vorschubrichtung entlang der Vorschubbahn 2a bewegt werden.

Zusammenfassend umfasst jede Rüttelvorrichtung 3 Mittel zur Erzeugung einer elektromagnetischen Welle 32, einen elektromagnetischen Antrieb 33, der Vibrationen im Hinblick auf die Halteebene 1a erzeugen kann, vorzugsweise einen Verstärker 35, der die Vibrationen verstärken kann, die der elektromagnetische Antrieb 33 erzeugt hat, und Übertragungsorgane 34, die die Vibrationen auf die angeschlossene Bahn 2 übertragen können.

Alternativ oder zusätzlich kann ein pneumatisch oder hydraulisch angetriebenes Mittel oder ein piezoelektrisch angetriebenes Mittel zur Erzeugung der Vibrationen vorgesehen sein.

Genauer gesagt sind die Mittel zur Erzeugung der elektromagnetischen Welle 32 an sich bekannte elektronische Mittel, die an das Stromnetz, an Batterien oder etwas anderes angeschlossen werden und eine mechanische Welle oder ein elektromagnetisches Signal in einer gewünschten und eventuell voreingestellten Form und Frequenz erzeugen können. Sie sind im Besonderen geeignet, um eine Rechteckwelle mit Frequenzen vorzugsweise zwischen 0.5 s und 10 ms und noch besser zwischen 100 ms und 50 ms, einer Spannung zwischen 15 V und 30 V, vorzugsweise 24, und einer Stromstärke zwischen 0.5 A und 2 A, vorzugsweise 1 A, zu erzeugen. Noch mehr zu bevorzugen ist es, wenn die Rechteckwelle zwischen einer positiven Phase zwischen den angegebenen Spannungen und Frequenzen und einer Nullphase schwingt; außerdem hat die positive Phase im Vergleich zur negativen Phase vorzugsweise eine längere Dauer, vorzugsweise mehr als zweimal und noch besser zwischen zwei- und dreimal länger. Ähnliche Mittel werden beispielsweise in Verzerrern von elektronischen Musikinstrumenten oder in ähnlichen Vorrichtungen verschiedener Arten und Typen verwendet und sind durch einen branchenkundigen Fachmann einfach herzustellen.

Die Mittel zur Erzeugung 32 sind auf der Halteebene 1a angeordnet und elektrisch mit dem elektromagnetischen Antrieb 33 verbunden. Die elektromagnetische Welle 32 wird im Besonderen direkt an den elektromagnetischen Antrieb 33 gesendet.

Der elektromagnetische Antrieb 33 ist an der Halteebene 1a befestigt und kann im Hinblick auf die Halteebene 1a Vibrationen mit einer mit der elektromagnetischen Welle korrelierten Frequenz und Größe erzeugen. Im Wesentlichen wandelt der elektromagnetische Antrieb 33 die elektromechanischen Wellen in mechanische Vibrationen um.

Der elektromagnetische Antrieb 33 umfasst zum Beispiel eine Zylinderspule 331, die passenderweise direkt mit den Mitteln zur Erzeugung 32 verbunden ist, ein ferromagnetisches Element 332 in der Zylinderspule 331, das sich durch den in der Zylinderspule 331 vorhandenen elektrischen Strom magnetisieren kann, und einen Permanentmagneten 333. Außerdem ist vom ferromagnetischen Element 332 und vom Permanentmagneten 333 eines ein im Hinblick auf die Halteebene 1a oszillierbares Element 334. Die Schwingungen werden wegen der Schwankung der elektromagnetischen Eigenschaften des ferromagnetischen Elements 332 erzeugt, die auf die Schwankung der Polarität oder der Intensität des elektrischen Stroms in der Zylinderspule 331 zurückzuführen ist, und erzeugen die Vibrationen.

Die Vibrationen haben vorzugsweise dieselben Frequenzen wie die erwähnten elektromagnetischen Wellen und eine Größe zwischen 1 mm und 1 cm und noch besser zwischen 3 mm und 4 mm.

Vorzugsweise ist das oszillierbare Element 334 das ferromagnetische Element und passenderweise ein prismatisches oder zylindrisches oder ähnliches Element, das konzentrisch an einem feststehenden, fest mit der Halteebene 1a verbunden Element 335 angeordnet ist, das passenderweise durch den Permanentmagneten 333 gebildet wird. Das feststehende Element 335 ist vorzugsweise zylindrisch oder ähnlich und vorzugsweise ein Element mit Seitenwänden 335a und nur einer Grundfläche 335b, die das oszillierbare Element halten kann.

Zwischen der Grundfläche 335b und dem oszillierbaren Element 334 ist außerdem vorzugsweise ein elastisches Element 336 angebracht, das gegen die Verschiebungen wegen der elektromagnetischen Kräfte reagieren kann.

Das feststehende Element 335 ist schließlich passenderweise von der Zylinderspule 331 umgeben, und die Achse der Zylinderspule 33a fällt passenderweise mit der vorwiegenden Ausdehnungsrichtung des oszillierbaren Elements 334 zusammen und vorzugsweise auch mit der Vertiefung im feststehenden Element und daher vorzugsweise mit der Richtung der Schwingungen des oszillierbaren Elements.

Das oszillierbare Element 334 ist mechanisch mit den Übertragungsorganen 34 verbunden. Sie umfassen und/oder bestehen vorzugsweise aus einer Übertragungswelle 340, die direkt mit dem oszillierbaren Element 334 verbunden ist und vorzugsweise eine Achse 340a hat, die mit der Achse der Zylinderspule 33a zusammenfällt.

Der Verstärker 35, der die vom elektromagnetischen Antrieb 33 erzeugten Vibrationen verstärken kann, umfasst mindestens einen feststehenden Teil 351, der mit der Halteebene 1a fest verbunden ist, mindestens einen beweglichen Teil 352 , der mit der Bahn 2 fest verbunden ist, und einen belasteten Teil 354, der mit den Übertragungsorganen 334 fest verbunden ist und vorzugsweise mit der Welle 340 fest verbunden ist, und Mittel zur Erzeugung von Potenzial 353, die die von der Welle 340 übertragenen Vibrationen verstärken können.

Vorzugsweise umfassen die Mittel zur Erzeugung von Potenzial 353 elastische Elemente und noch besser zwei parallel angeordnete Metallbleche, von denen ein Ende den feststehenden Teil 351 und das andere Ende den beweglichen Teil 352 bildet. Der belastete Teil 354 befindet sich zwischen den Enden, welche die Teile 351 und 352 bilden. Noch besser ist das erste Metallblech direkt mit der Welle 340 verbunden und das zweite Metallblech durch ein weiteres elastisches Element mit der Welle 340 verbunden.

Außerdem weist der Verstärker 35 eine Resonanzfrequenz nahe der Frequenz der Vibrationen auf, die vom elektromagnetischen Antrieb 33 erzeugt werden, und daher nahe den vom Antrieb 33 übertragenen Vibrationen, sodass die mechanischen Vibrationen des Antriebs 33 deutlich vervielfacht werden, im Besonderen mit einem Transmissionsfaktor, das heißt mit einem Verhältnis zwischen den Ausgangs- und Eingangsvibrationen, höher als 5 und vorzugsweise höher als 10.

Wie bekannt ist, hängen die Resonanzfrequenzen nämlich von den physikalischen Eigenschaften des Systems ab und sind vom branchenkundigen Fachmann einfach auswählbar. Es können weitere Verstärkungsvorrichtungen 3 vorhanden sein, die mit der Welle 340 nicht verbunden sind und daher nicht den belasteten Teil 354 darstellen, sondern ausschließlich über den beweglichen Teil 352 und den feststehenden Teil 351 verbunden sind.

Die Vereinzelungsmaschine 1 umfasst außerdem Mittel zur Erfassung 4 der Elemente 100, die die Bahnen 2 verlassen, die den Durchgang der Elemente 100 durch die Ausgangsöffnung 20 erfassen können.

Sie bestehen vorzugsweise aus Mitteln zur Emission 41 eines Lichtbündels 41a, vorzugsweise eines Laserstrahls, der einen Fühler 42 treffen kann, wenn er nicht unterbrochen wird. Der Durchgang des Objekts 100 unterbricht das Lichtbündel 41a. Der Fühler 42 kann daher den Durchgang der Objekte 100 erfassen. Vorzugsweise ist ein Fühler für jede einzelne Bahn 2 vorhanden.

Die Vereinzelungsmaschine 1 umfasst außerdem Steuerungsmittel der Vereinzelungsmaschine 1, die funktionell mit den Mitteln zur Erfassung 4 und den Rüttelvorrichtungen 3 verbunden sind. Die Steuerungsmittel können den Stopp einer der Rüttelvorrichtungen 3 steuern, wenn die Mittel zur Erfassung 4 den Durchgang eines oder einer festgelegten Anzahl von Elementen 100 durch die Ausgangsöffnung 20 der Bahn 2 erfassen, die mit den dazugehörigen Rüttelvorrichtungen 3 verbunden ist, die im Begriff sind, angehalten zu werden. Die Steuerungsmittel können elektronisch oder ähnlicher Art sein.

Mit einem Stopp der Rüttelvorrichtung wird auch damit gemeint, dass die Steuerungsmittel die Rüttelvorrichtungen 3 derart regeln und/oder steuern können, dass die Vibrationseigenschaften geändert werden, beispielsweise die Frequenz reduziert wird, so dass die Elemente 100 die Bahnen 2 nicht verlassen oder zumindest langsamer befördert werden.

Die Vereinzelungsmaschine 1 umfasst Mittel zum Sammeln 6 der Gegenstände 100 nach den Bahnen 2, die die Gegenstände 100 nach ihrem Austreten von den Bahnen 2 sammeln können, und Mittel zur Weiterleitung 7 der Gegenstände 100, die die Weiterleitung der Gegenstände 100 von den Sammelmitteln 6 zu einer Form 8 simultan ermöglichen können, und bei der die Weiterleitungsmittel 7 die Gegenstände 100 weiterleiten können, wenn jede der Bahnen 2 einen Gegenstand 100 oder eine festgelegte Anzahl von Gegenständen 100 in die Sammelmittel 6 weitergeleitet hat.

Eine simultane Weiterleitung der Gegenstände 100 kann auch eine kontrollierte Weiterleitung umfassen, bei welcher die Gegenstände 100 jeweils in einer bestimmten Prozessphase im Wesentlichen gleichzeitig weitergeleitet werden, beispielsweise können die Gegenstände 100 gleichzeitig oder sequentiell zu einer jeweiligen Reihe einer Form 8 weitergeleitet werden.

Wichtig ist dass die Weiterleitung simultan zur Anwesenheit einer darunterliegenden Form 8 erfolgt.

Wenn man mehr ins Detail geht, sind mindestens zwei Varianten vorgesehen, eine durchgängige oder mit Walzen versehene Variante und eine Intervall-Variante.

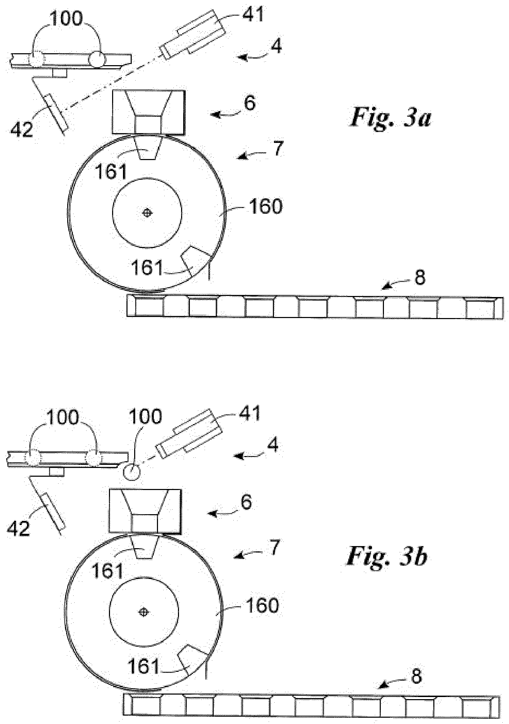

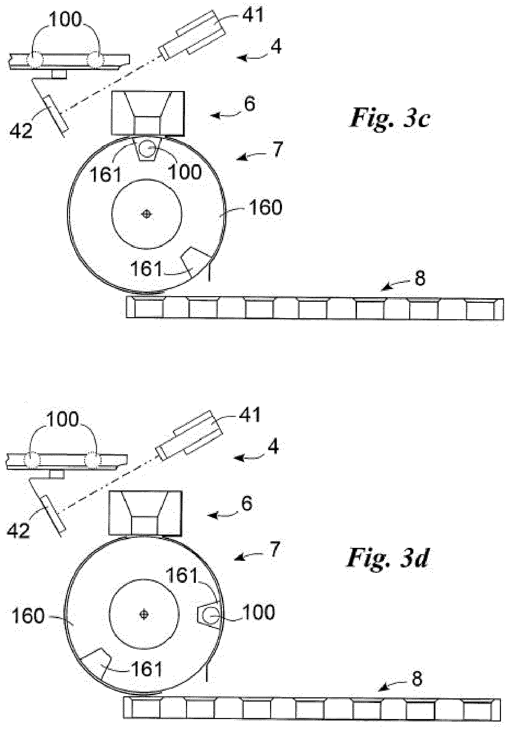

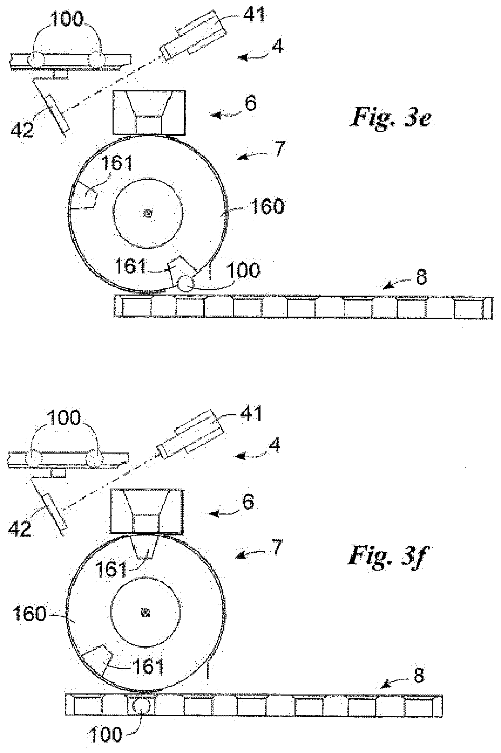

Im Fall der durchgängigen Variante (Figur 3a-3f) umfassen die Sammelmittel 6 eine Trommel 160, die Sitze 161, vorzugsweise zwei oder drei Sitze, für die Gegenstände 100 umfasst, die zur äußeren Fläche der Trommel 160 gewandt sind. Außerdem bestehen die Weiterleitungsmittel 7 aus einem Motor zum Drehen der Trommel 160, und die Sitze 161 sind, je nach winkeliger Position der Trommel 160 zur Ausgangsöffnung 20 oder zur Form 8 gewandt. Vorzugsweise ist außerdem ein Schutz 162 vorgesehen, das das Herabfallen von Gegenständen 100 verhindern kann, wenn sie nicht in den passenden Positionen sind, das heißt der Form 8 oder den Sammelmitteln zugewandt.

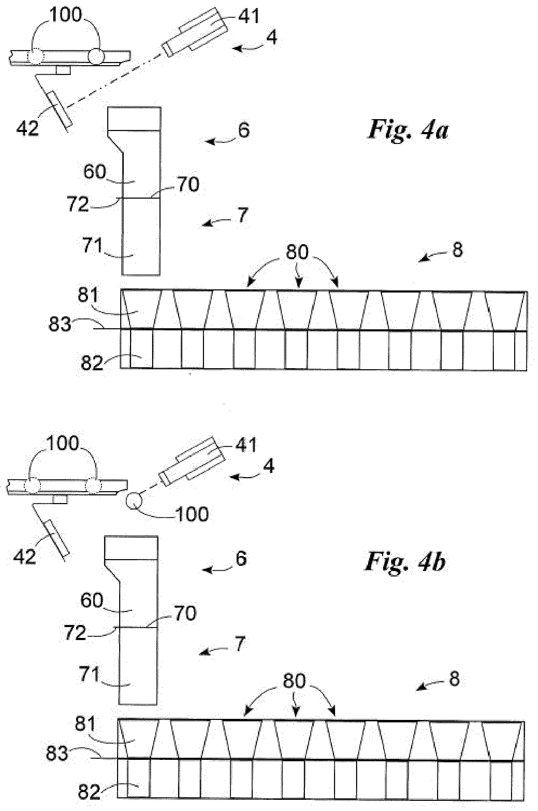

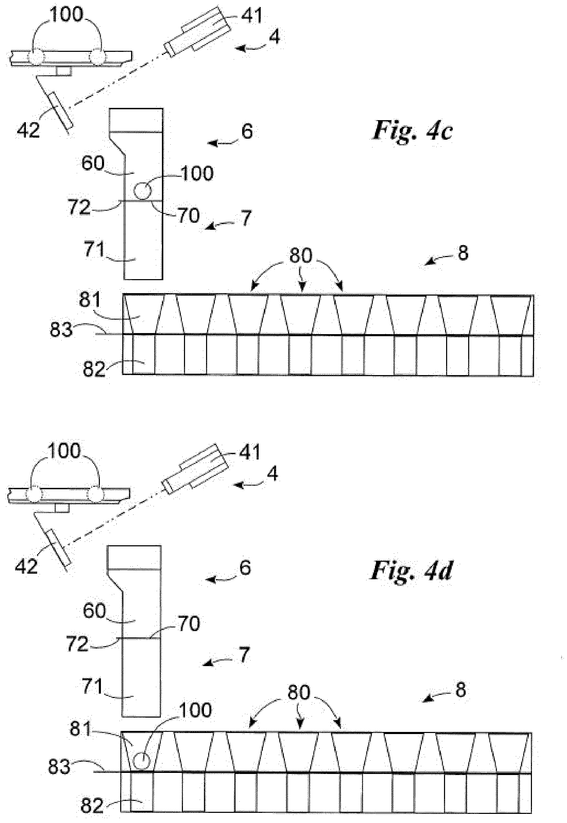

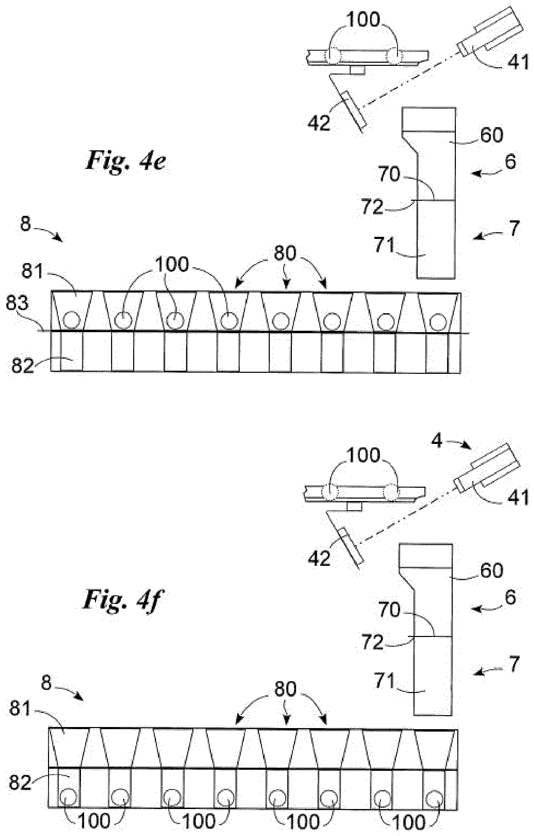

Im Fall der intermittierenden Variante (Figur 4a-4f) umfassen die Sammelmittel 6 einen Trichter 60 nach jeder Bahn 2, und die Weiterleitungsmittel 7 umfassen eine Scheidewand 70 und einen Kanal 71. Die Scheidewand 70 ist geeignet, um den Kanal 71 zu verschließen, während die Weiterleitungsmittel 7 Mittel zum Öffnen 72 der Scheidewände 70 umfassen, die alle Scheidewände 70 zur gleichen Zeit, vorzugsweise im Wesentlichen simultan öffnen können, sodass die simultane Weiterleitung der Gegenstände 100 ermöglicht wird.

Nach dem Kanal 71 ist eine verschiebbare Form 8 vorhanden, die mehrere Sitze 80 für die Gegenstände 100 umfasst. Die Form 8 kann sich verschieben, sodass die Sitze jeweils einzeln unter dem Kanal 71 positioniert werden können.

Vorzugsweise weist auch die Form 8 für jeden Sitz 80 einen Trichterteil 81 und einen darunterliegenden Aufnahmeteil 82 auf, die ebenfalls vorzugsweise durch eine zu öffnende Scheidewand 83 getrennt sind, die sie verbindet. In diesem Fall kann der Trichterteil 81 die Sammelmittel 60 darstellen und die zu öffnende Scheidewand 82 kann die Scheidewand 70 ersetzen.

Die Funktionsweise der Maschine zur Vereinzelung 1 von Elementen 100, die oben in ihrer Struktur beschrieben wurde, ist folgende.

Sie stellt auch ein innovatives Verfahren zur Vereinzelung von Elementen 100 dar, vorzugsweise von der vorhin beschriebenen Art und vorzugsweise mit der oben beschriebenen Vereinzelungsmaschine 1 durchgeführt.

Dieses Vereinzelungsverfahren umfasst bevorzugt eine Phase der Kanalisierung der Elemente 100 entlang der Bahnen 2 durch Verteiler, die an sich bekannt sind.

Der Kanalisierungsphase folgt eine Phase der Weiterleitung der Elemente 100, während der der Vorschub der Elemente 100 durch mechanische Vibrationen 20 erfolgt, die auf die einzelnen Bahnen 2 übertragen werden, im Besonderen durch die beschriebenen Rüttelvorrichtungen 3. In dieser Phase rücken die Elemente 100 in Richtung des Gravitationsgradienten entlang der Vorschubbahn 2a zu den Ausgangsöffnungen 20 vor, durch die die Elemente 100 austreten.

Gleichzeitig beginnt beim Austritt der Elemente die Erfassungsphase. Während dieser Phase werden im Besonderen durch die beschriebenen Mittel zur Erfassung 4 die Elemente 100 erfasst, welche die Bahn 2 verlassen. Es wird daher im Wesentlichen der Durchgang der Elemente 100 durch die Ausgangsöffnung 20 erfasst. Im Besonderen wird der Durchgang von Elementen 100 von jeder einzelnen Bahn erfasst.

Außerdem werden während dieser Erfassungsphase die auf die einzelnen Bahnen 2 angewendeten mechanischen Vibrationen gestoppt und/oder geregelt und/oder gesteuert, wenn der Durchgang eines Elements 100 oder einer festgelegten Anzahl von Elementen 100 durch die Austrittsöffnung 20 der einzelnen Bahn 2 erfasst wird, insbesondere wenn die Steuermittel ein entsprechendes von den Erfassungsmitteln erzeugtes Signal erhalten. Im Besonderen erfolgt der Stopp der Vibrationen durch den Befehl der Steuermittel an die Rüttelvorrichtungen 3.

Wie oben bereits erläutert können die Steuerungsmittel die Rüttelvorrichtungen 3 derart regeln und/oder steuern, dass die Vibrationseigenschaften geändert werden, beispielsweise die Frequenz reduziert wird, so dass die Elemente 100 die Bahnen 2 nicht oder langsamer verlassen.

Dank der beschriebenen Funktionsweise verlassen die Gegenstände 100 die Bahnen 2 Stück für Stück, und es kommt nicht vor, dass zwei Gegenstände aus einer einzelnen Bahn 2 austreten wenn dies nicht gewollt ist, während aus einer anderen Bahn 2 nur einer oder keiner austritt.

Nach der Erfassungsphase folgt eine Sammelphase der Gegenstände 100 nach den Bahnen 2, bei der die Gegenstände 100 nach ihrem Austreten von den Bahnen 2 gesammelt werden, und nach der Sammelphase eine Phase der Weiterleitung derselben Gegenstände 100, die durchgeführt wird, wenn jede der Bahnen 2 einen der Gegenstände 100 oder die festgelegte Anzahl von Gegenständen 100 in der Sammelphase gesammelt hat, und im Wesentlichen simultan auf allen Bahnen 2 erfolgt.

Wenn die Vereinzelungsmaschine 1 mit Walzen ausgestattet ist (Figur 3a-3f), erfolgt die Sammelphase auf folgende Weise.

Die Trommeln 160 oder die Trommel 160, die einzeln mit Sitzen für alle Bahnen sein kann, dreht und positioniert sich so, dass ein Sitz 161 dem Ausgang 20 der Bahnen 2 zugewandt ist. Im Wesentlichen haben alle Bahnen 2 einen Sitz 161, der zum Ausgang gerichtet ist.

Die Sitze 161 werden nach und nach gefüllt, und die Vibrationen der Bahn 2 werden nach und nach angehalten.

Wenn alle Sitze 161 voll sind, setzt die Walze simultan und synchron für alle Sitze 161 und daher in Bezug auf alle Bahnen 2 die Drehung fort. Folglich sind die Sitze 161 auf die Formen 8 gerichtet, wo sie die Gegenstände 100 simultan abladen.

Die Form 8 wird dann verschoben, und der Vorgang beginnt erneut.

Wenn es sich dagegen um eine intermittierende Vereinzelungsmaschine 1 (Figur 4a-4f) handelt, erfolgt die Sammelphase auf folgende Weise.

Die Gegenstände 100 gelangen in den Trichter 60 nach dem Ausgang 20 der Bahnen 2. Im Wesentlichen haben alle Bahnen 2 einen Trichter 60, der dem Ausgang 20 zugewandt ist.

Die Trichter 60 werden nach und nach gefüllt, und die Vibrationen der Bahn 2 werden nach und nach angehalten. Die Gegenstände 100 bleiben daher auf der Höhe der Scheidewände 70 liegen. Wenn alle Trichter 60 voll sind, steuern die Öffnungsmittel 72 die simultane Öffnung aller Scheidewände 70, und die Gegenstände 100 werden, vorzugsweise durch die Wirkung der Schwerkraft, entlang den Kanälen 71 weitergeleitet.

Folglich wird ein erster Sitz 80 aller Formen 8 im Hinblick auf alle Bahnen 2 gefüllt.

Die Form 8 verschiebt sich, und der Vorgang wiederholt sich, sodass alle zweiten Sitze und nach und nach alle Sitze 80 gefüllt werden.

An dieser Stelle können die Formen 8 so wie sie sind transportiert werden oder jede Form 8 kann gleichzeitig alle Gegenstände vom Trichterteil 814 durch Öffnen der zu öffnenden Scheidewände 83 zum Aufnahmeteil 80 weiterleiten, um danach alles zu verschieben.

Die Form 8 wird dann in einen anderen Bereich der Anlage transportiert, und der Vorgang beginnt erneut mit einer neuen Form.

Mit der Erfindung werden bedeutende Vorteile erzielt.

Die Vereinzelungsmaschine 1 ermöglicht nämlich, mehrere Bahnen auch für sehr unregelmäßige Gegenstände 100 zu synchronisieren. Im Besonderen werden die Arbeitsgänge ab der Weiterleitungsphase allesamt perfekt synchronisiert.

Dies ist dank der Idee möglich, die Vibrationen nach der Erfassung eines im Ausgang befindlichen Gegenstands einzustellen und/oder zu steuern und/oder zu regeln, aber auch dank der einzelnen Rüttelvorrichtungen und ähnlichen Vorrichtungen, wie sie vorhin beschrieben wurden.

Die Vereinzelungsmaschine 1 ist außerdem einfach und wirtschaftlich. Im Besonderen umfasst die Maschine nicht den komplexen mechanischen Teil, der im Allgemeinen aus komplexen und teuren Rüttelvorrichtungen 3 besteht.

Die Maschine ist außerdem sehr robust und kaum störungsanfällig, da eben verschiedene mechanische Komponenten nicht vorhanden sind.

Die Erfindung kann Varianten aufweisen, die in den Schutzbereich fallen, der vom Gegenstand der Ansprüche definiert wird.

## Patentansprüche

1. Maschine (1) zur Vereinzelung von Elementen (100), die Folgendes umfasst:
- mehrere Bahnen (2), von denen jede eine Vorschubbahn (2a) bildet und jede geeignet ist, um die entlang der Vorschubbahn (2a) aufgereihten Elemente (100) weiterzuleiten, wobei jede Bahn (2) eine Austrittsöffnung (20) einschließt, durch die die Elemente (100) austreten können,
**dadurch gekennzeichnet, dass** sie Folgendes umfasst:
- mehrere Rüttelvorrichtungen (3), von denen jede mit nur einer der Bahnen (2) verbunden ist und mechanische Vib-15 rationen auf die verbundene Bahn (2) übertragen kann, um den Vorschub der Elemente (100) entlang der Vorschubbahn (2a) zu bewirken,
wobei die Maschine zudem Folgendes umfasst: entweder
- Mittel zur Erfassung (4) von Elementen (100), die die Bahn (2) verlassen, die dazu ausgebildet sind den Durchgang der Elemente (100) durch die Ausgangsöffnung (20) zu erfassen, sowie
- Steuerungsmittel der Vereinzelungsmaschine (1), die funktionell mit den Erfassungsmitteln (4) und den Rüttelvorrichtungen (3) verbunden sind und dazu ausgebildet sind, den Stopp einer der Rüttelvorrichtungen (3) zu befehlen, wenn die Mittel zur Erfassung (4) den Durchgang eines Elements (100) durch die Ausgangsöffnung (20) der verbundenen Bahn (2) erfassen,
oder
Mittel zur Erfassung (4) von Elementen (100), die die Bahn (2) verlassen, insbesondere zur Erfassung des Durchgangs eines Elements (100) durch eine Ausgangsöffnung (20), und zur Erzeugung eines entsprechenden Signals, sowie
- Steuerungsmittel der Vereinzelungsmaschine (1), die funktionell mit den Erfassungsmitteln (4) und den Rüttelvorrichtungen (3) verbunden sind und dazu ausgebildet sind, die Vibrationen der Rüttelvorrichtungen (3) zu regeln und/oder zu steuern in Abhängigkeit des von den Mitteln (4) erzeugten Signals.

2. Maschine (1) nach Anspruch 1, wobei die Mittel zur Erfassung (4) von Elementen (100), die die Bahn (2) verlassen, optische Mittel (41, 42) sind.

3. Vereinzelungsmaschine (1) nach Anspruch 1 oder 2, die Folgendes umfasst:
- Mittel zum Sammeln (6) der Gegenstände (100) nach den Bahnen (2), die dazu ausgebildet sind, die Gegenstände (100) nach ihrem Austreten von den Bahnen (2) zu sammeln,
- Mittel zur Weiterleitung (7) der Gegenstände (100), die dazu ausgebildet sind, die Weiterleitung der Gegenstände (100) von den Sammelmitteln (6) zu einer Form (8) simultan zu ermöglichen, und bei der die
- Weiterleitungsmittel (7), dazu ausgebildet sind, die Gegenstände (100) weiterzuleiten, wenn jede der Bahnen (2) einen Gegenstand oder eine festgelegte Anzahl der Gegenstände (100) in die Sammelmittel (6) weitergeleitet hat.

4. Vereinzelungsmaschine (1) nach dem vorhergehenden Anspruch, bei der die Sammelmittel (6) einen Trichter (60) nach jeder der Bahnen (2) umfassen und bei der die Weiterleitungsmittel (7) je eine Scheidewand (70) und einen Kanal (71) umfassen, wobei die Scheidewand (70) geeignet ist, um den Kanal (71) zu verschließen, wobei die Weiterleitungsmittel (7) außerdem Mittel zum Öffnen (72) der Scheidewände umfassen, die alle Scheidewände (70) zur gleichen Zeit öffnen können, sodass die simultane Weiterleitung der Gegenstände (100) ermöglicht wird.

5. Vereinzelungsmaschine (1) nach Anspruch 3 bei der die Sammelmittel (6) eine Trommel (160) umfassen, die Sitze (161) für die Gegenstände (100) umfasst, die zur äußeren Fläche der Trommel (160) gewandt sind, und bei der die Weiterleitungsmittel (7) aus einem Motor zum Drehen der Trommel (160) bestehen, wobei die Sitze (161) je nach Position der Trommel (160) zur Ausgangsöffnung (20) oder zur Form (8) gewandt sind.

6. Vereinzelungsmaschine (1) nach einem oder mehreren der vorhergehenden Ansprüche, bei der jede der Rüttelvorrichtungen (3) Mittel zur Erzeugung einer elektromagnetischen Welle (32), einen elektromagnetischen Antrieb (33), der dazu ausgebildet ist, direkt von den Mitteln zur Erzeugung (32) angetrieben zu werden und Vibrationen im Hinblick auf eine Halteebene (1a) zu erzeugen, deren Frequenz und Größe mit der elektromagnetischen Welle korreliert sind, Übertragungsorgane (34), welche dazu ausgebildet sind, die vom elektromagnetischen Antrieb erzeugten Vibrationen auf ein externes Element zu übertragen, und einen Verstärker (35) umfasst, der dazu ausgebildet ist, die vom elektromagnetischen Antrieb (33) erzeugten Vibrationen zu verstärken und Folgendes umfasst: mindestens einen feststehenden Teil (351), der mit der Halteebene (1a) fest verbunden ist, mindestens einen beweglichen Teil (352), der mit der Bahn (2) fest verbunden ist, einen belasteten Teil (354), der mit den Übertragungsorganen (34) fest verbunden ist, Mittel zur Erzeugung von Potenzial (353), die dazu ausgebildet sind, die von den Übertragungsmitteln (34), vorzugsweise einer Welle (340), übertragenen Vibrationen zu verstärken.

7. Vereinzelungsmaschine (1) nach dem vorhergehenden Anspruch, bei der die Mittel zur Erzeugung von Potenzial (353) elastische Elemente umfassen, welche den feststehenden Teil (351) und den beweglichen Teil (352) gegenseitig mechanisch verbinden können.

8. Verfahren zur Vereinzelung von Elementen (100), das Folgendes umfasst:
- eine Phase der Kanalisierung der Elemente (100) entlang mehrerer Bahnen (2), von denen jede eine Vorschubbahn (2a) bildet,
- eine Phase der Weiterleitung der Elemente (100) entlang der Vorschubbahn (2a) zu Austrittsöffnungen (20), durch die die Elemente (100) austreten,
wobei
- die Weiterleitungsphase durch mechanische Vibrationen erfolgt, die auf die einzelnen Bahnen (2) übertragen werden,
**dadurch gekennzeichnet, dass** es
- eine Phase der Erfassung der Elemente (100) umfasst, die die Bahn (2) verlassen, bei der der Durchgang der Elemente (100) durch die Ausgangsöffnung (20) erfasst wird,
und bei dem die auf jede einzelne Bahn (2) übertragenen mechanischen Vibrationen gestoppt werden, wenn der Durchgang eines Elements (100) durch die Austrittsöffnung (20) der einzelnen Bahn (2) erfasst wird,
oder dadurch, dass es
eine Phase der Erfassung der Elemente (100) umfasst, die die Bahn (2) verlassen, bei der der Durchgang der Elemente (100) durch die Ausgangsöffnung (20) erfasst und ein entsprechendes Signal erzeugt wird,
und bei dem die auf jede einzelne Bahn (2) übertragenen mechanischen Vibrationen geregelt und/oder gesteuert werden in Abhängigkeit des bei der Erfassung der Elemente (100) erzeugten Signals.

9. Verfahren nach einem der vorhergehenden Ansprüche 8, das Folgendes umfasst:
- eine Phase des Sammelns der Gegenstände (100) nach den Bahnen (2), bei der die Gegenstände (100) nach ihrem Austreten von den Bahnen (2) gesammelt werden,
- eine Phase der Weiterleitung der Gegenstände (100) im Anschluss an die Sammelphase, die simultan auf jeder der Bahnen (2) erfolgt, wenn jede der Bahnen (2) einen Gegenstand oder eine festgelegte Anzahl der Gegenstände (100) in die Sammelphase weitergeleitet hat.

10. Verfahren nach einem der Ansprüche 8 bis 9, **dadurch gekennzeichnet, dass** es zur Vereinzelung von Nahrungsmitteln, insbesondere von Trockenfrüchten, eingesetzt wird.

## Claims

1. A machine (1) for separating elements (100), comprising:
- a plurality of paths (2), each forming a feed path (2a) and each adapted to convey the elements (100) lined up along the feed path (2a), each path (2) including an outlet opening (20) through which the elements (100) can exit,
**characterized in that** it comprises
- a plurality of shaking devices (3), each of which is connected to only one of the paths (2) and is capable of transmitting mechanical vibrations to the connected path (2) to cause the advancement of the elements (100) along the advancement path (2a),
the machine further comprising
either
- means (4) for detecting elements (100) leaving the path (2), adapted to detect the passage of the elements (100) through the outlet opening (20), and
- control means of the separating machine (1), functionally connected to the detection means (4) and to the shaking devices (3) and adapted to command the stop of one of the shaking devices (3) when the detection means (4) detect the passage of an element (100) through the exit opening (20) of the connected path (2),
or
- means for detecting (4) elements (100) leaving the path (2), in particular for detecting the passage of an element (100) through an outlet opening (20), and for generating a corresponding signal, and
- means for controlling the separating machine (1), functionally connected to the detection means (4) and to the shaking devices (3) and adapted to regulate and/or control the vibrations of the shaking devices (3) as a function of the signal generated by the means (4).

2. Machine (1) according to claim 1, wherein the means for detecting (4) elements (100) leaving the path (2) are optical means (41, 42).

3. Separating machine (1) according to claim 1 or 2, comprising:
- Means for collecting (6) the objects (100) downstream of the paths (2), adapted to collect the objects (100) after their exit from the paths (2),
- means (7) for forwarding the objects (100), adapted to allow the forwarding of the objects (100) from the collecting means (6) to a mold (8) simultaneously, and wherein the means (7) for forwarding the objects (100) to the mold (8) are adapted to allow the forwarding of the objects (100) from the collecting means (6) to the mold (8) simultaneously.
- transfer means (7) are adapted to transfer said articles (100) when each of said paths (2) has transferred an article or a predetermined number of said articles (100) into said collecting means (6).

4. Separating machine (1) according to the preceding claim, in which the collecting means (6) comprise a funnel (60) downstream of each of the paths (2) and in which the conveying means (7) each comprise a partition (70) and a channel (71), the partition (70) being suitable to close the channel (71), the forwarding means (7) further comprising means for opening (72) the partitions, which can open all the partitions (70) at the same time, so as to allow the simultaneous forwarding of the objects (100).

5. The separating machine (1) according to claim 3, wherein said collecting means (6) comprise a drum (160) comprising seats (161) for said objects (100) facing the outer surface of said drum (160), and wherein said forwarding means (7) consist of a motor for rotating said drum (160), said seats (161) facing the exit opening (20) or the mold (8) depending on the position of said drum (160).

6. The separating machine (1) according to one or more of the preceding claims, in which each of the shaking devices (3) comprises means for generating an electromagnetic wave (32), an electromagnetic drive (33) adapted to be driven directly by the generating means (32) and to generate vibrations with respect to a holding plane (1a), the frequency and magnitude of which are correlated with the electromagnetic wave, transmission means (34) adapted to transmit the vibrations generated by the electromagnetic drive to an external element, and an amplifier (35) adapted to amplify the vibrations generated by the electromagnetic drive (33), and comprising at least one fixed part (351) integral with the holding plane (1a), at least one movable part (352) integral with the path (2), a loaded part (354) integral with the transmission means (34), potential generating means (353) adapted to amplify the vibrations transmitted by the transmission means (34), preferably a shaft (340).

7. The separating machine (1) according to the preceding claim, in which the means for generating potential (353) comprise elastic elements capable of mutually mechanically connecting the fixed part (351) and the movable part (352).

8. A method for separating elements (100), comprising the following:
- phase of channeling the elements (100) along a plurality of paths (2), each of which forms a feed path (2a),
- phase of forwarding the elements (100) along the feed path (2a) to exit openings (20) through which the elements (100) exit,
wherein
- the forwarding phase is carried out by mechanical vibrations transmitted to the individual paths (2),
**characterized in that** it
- comprises a phase of detection of the elements (100) leaving the path (2), in which the passage of the elements (100) through the exit opening (20) is detected
and in which the mechanical vibrations transmitted to each individual path (2) are stopped when the passage of an element (100) through the outlet opening (20) of the individual path (2) is detected,
or **in that** there is
a phase of detection of the elements (100) leaving the path (2), in which the passage of the elements (100) through the exit aperture (20) is detected and a corresponding signal is generated
and in which the mechanical vibrations transmitted to each individual path (2) are regulated and/or controlled as a function of the signal generated during the detection of the elements (100).

9. A method according to any one of the preceding claims 8, comprising:
- a phase of collecting the objects (100) following the paths (2), in which the objects (100) are collected after their exit from the paths (2),
- a phase of forwarding the objects (100) following the collecting phase, which takes place simultaneously on each of the paths (2) when each of the paths (2) has forwarded an object or a predetermined number of the objects (100) to the collecting phase.

10. Method according to any one of claims 8 to 9, **characterized in that** it is used for separating food products, in particular dried fruits.

## Revendications

1. Machine (1) pour séparer des éléments (100), comprenant :
- une pluralité de pistes (2), dont chacune forme une piste d'avancement (2a) et dont chacune est appropriée pour faire avancer les éléments (100) alignés le long de la piste d'avancement (2a), chaque piste (2) comprenant une ouverture de sortie (20) à travers laquelle les éléments (100) peuvent sortir,
**caractérisé en ce qu'**il comprend
- une pluralité de dispositifs de jogging (3), dont chacun est associé à une seule des pistes (2) et est capable de transmettre des vibrations mécaniques à la piste associée (2) afin de faire avancer les éléments (100) le long de la piste d'avancement (2a),
la machine comprend en outre
soit
- des moyens (4) pour détecter des éléments (100) quittant la piste (2), adaptés pour détecter le passage des éléments (100) à travers l'ouverture de sortie (20), et
- des moyens de commande de la machine de séparation (1), reliés fonctionnellement aux moyens de détection (4) et aux dispositifs de taquage (3) et adaptés pour commander l'arrêt de l'un des dispositifs de taquage (3) lorsque les moyens de détection (4) détectent le passage d'un élément (100) à travers l'ouverture de sortie (20) de la piste associée (2),
ou
- des moyens (4) pour détecter des éléments (100) quittant la piste (2), en particulier pour détecter le passage d'un élément (100) à travers une ouverture de sortie (20) et pour générer un signal correspondant, et
- des moyens de commande de la machine de séparation (1), fonctionnellement connectés aux moyens de détection (4) et aux dispositifs vibrants (3) et adaptés pour réguler et/ou commander les vibrations des dispositifs vibrants (3) en fonction du signal généré par les moyens (4).

2. Machine (1) selon la revendication 1, dans laquelle les moyens de détection (4) des éléments (100) quittant la piste (2) sont des moyens optiques (41, 42).

3. Machine de séparation (1) selon la revendication 1 ou 2, comprenant :
- Moyens pour collecter (6) les éléments (100) en aval des pistes (2), qui sont adaptés pour collecter les éléments (100) après leur sortie des pistes (2),
- des moyens (7) pour transférer les éléments (100), qui sont conçus pour permettre aux éléments (100) d'être transférés simultanément du moyen de collecte (6) à un moule (8), et dans lequel les moyens de transfert (7) sont conçus pour permettre aux éléments (100) d'être transférés simultanément du moyen de collecte (6) au moule (8).
- des moyens de transfert (7) sont adaptés pour transférer lesdits éléments (100) lorsque chacune desdites pistes (2) a transféré un article ou un nombre prédéterminé desdits éléments (100) dans lesdits moyens de collecte (6).

4. Machine de séparation (1) selon la revendication précédente, dans laquelle les moyens de collecte (6) comprennent une trémie (60) en aval de chacune des pistes (2) et dans laquelle les moyens de transfert (7) comprennent chacun une partition (70) et un canal (71), la partition (70) étant apte à pour fermer le canal (71), le moyen de transfert (7) comprenant en outre des moyens pour ouvrir (72) les cloisons, qui peuvent ouvrir toutes les partitions (70) en même temps, de manière à permettre le transfert simultané des éléments (100).

5. Machine de séparation (1) selon la revendication 3, dans laquelle les moyens de collecte (6) comprennent un tambour (160) comportant des sièges (161) pour les éléments (100) en regard de la surface extérieure du tambour (160), et dans laquelle les moyens de transfert (7) consistent en un moteur pour faire tourner le tambour (160), les sièges (161) étant en regard de l'ouverture de sortie (20) ou du moule (8) selon la position du tambour (160).

6. Machine de séparation (1) selon une ou plusieurs des revendications précédentes, dans laquelle chacun des dispositifs vibrants (3) comprend des moyens de génération d'une onde électromagnétique (32), un entraînement électromagnétique (33) adapté pour être entraîné directement par les moyens de génération (32) et pour générer des vibrations par rapport à un plan de maintien (1a), dont la fréquence et l'amplitude sont corrélées à l'onde électromagnétique, des moyens de transmission (34) adaptés pour transmettre les vibrations générées par l'entraînement électromagnétique à un élément externe, et un amplificateur (35) adapté pour amplifier les vibrations générées par l'entraînement électromagnétique (33) et comprenant au moins une partie fixe (351) solidaire du plan support (1a), au moins une partie mobile (352) solidaire de la piste (2), une partie chargée (354) solidaire des moyens de transmission (34), des moyens générateurs de potentiel (353) adaptés pour amplifier les vibrations transmises par les moyens de transmission (34), de préférence un arbre (340).

7. Machine de séparation (1) selon la revendication précédente, dans laquelle les moyens pour générer un potentiel (353) comprennent des éléments élastiques qui peuvent lier mutuellement et mécaniquement la partie fixe (351) et la partie mobile (352).

8. Procédé de séparation d'éléments (100), comprenant les étapes suivantes :
- une phase de canalisation des éléments (100) le long de plusieurs pistes (2), dont chacune forme une piste d'avancement (2a),
- une phase d'avancement des éléments (100) le long du chemin d'alimentation (2a) vers des ouvertures de sortie (20) à travers lesquelles les éléments (100) sortent,
où
- la phase d'avancement est effectuée par des vibrations mécaniques transmises aux différentes pistes (2),
**caractérisé en ce qu'**il comprend
- une phase de détection des éléments (100) sortant de la piste (2), dans laquelle on détecte le passage des éléments (100) à travers l'orifice de sortie (20).
et dans lequel les vibrations mécaniques transmises à chaque piste individuelle (2) sont arrêtées lorsque le passage d'un élément (100) à travers l'orifice de sortie (20) de la piste individuelle (2) est détecté,
ou **en ce qu'**il y a
une phase de détection des éléments (100) quittant la piste (2), dans laquelle le passage des éléments (100) à travers l'ouverture de sortie (20) est détecté et un signal correspondant est généré,
et dans lequel les vibrations mécaniques transmises à chaque piste individuelle (2) sont régulées et/ou contrôlées en fonction du signal généré lors de la détection des éléments (100).

9. Procédé selon l'une quelconque des revendications précédentes 8, comprenant :
- une phase de collecte des éléments (100) après les pistes (2), dans laquelle les éléments (100) sont collectés après leur sortie des pistes (2),
- une phase de transfert des éléments (100) suivant la phase de collecte, qui a lieu simultanément sur chacune des pistes (2) lorsque chacune des pistes (2) a transféré un objet ou un nombre prédéterminé des éléments (100) à la phase de collecte.

10. Procédé selon l'une quelconque des revendications 8 à 9, **caractérisé en ce qu'**il est utilisé pour séparer des produits alimentaires, notamment des fruits secs.
